(19) Europäisches Patentamt / European Patent Office / Office européen des brevets

(11) **EP 3 739 511 B1**

(12) **EUROPÄISCHE PATENTSCHRIFT**

(45) Veröffentlichungstag und Bekanntmachung des Hinweises auf die Patenterteilung:
**23.04.2025 Patentblatt 2025/17**

(21) Anmeldenummer: **20173596.6**

(22) Anmeldetag: **07.05.2020**

(51) Internationale Patentklassifikation (IPC):
**G01C 21/00** *(2006.01)* **G01C 21/16** *(2006.01)*
G08G 1/01 *(2006.01)* G06V 20/56 *(2022.01)*

(52) Gemeinsame Patentklassifikation (CPC):
**G01C 21/3804; G01C 21/165;** G06V 20/56;
G08G 1/0112

(54) **VERFAHREN ZUM EINBETTEN VON LOKALEN SENSORDATEN IN EINE KARTE**

METHOD FOR EMBEDDING LOCAL SENSOR DATA IN A MAP

PROCÉDÉ D'INTÉGRATION DE DONNÉES DE CAPTEURS LOCALES DANS UNE CARTE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **14.05.2019 DE 102019206996**

(43) Veröffentlichungstag der Anmeldung:
**18.11.2020 Patentblatt 2020/47**

(73) Patentinhaber: **Volkswagen Aktiengesellschaft
38440 Wolfsburg (DE)**

(72) Erfinder:
• **Max, Stephan
38518 Gifhorn (DE)**
• **Niestroj, Richard
80802 München (DE)**
• **Prohm, Christopher
80809 München (DE)**

(56) Entgegenhaltungen:
DE-A1- 102009 029 553     DE-A1- 102016 212 629
DE-A1- 102017 200 234     US-A1- 2018 364 349

• **ROGERS JOHN G ET AL: "Mapping with a
ground robot in GPS denied and degraded
environments", 2015 AMERICAN CONTROL
CONFERENCE (ACC), IEEE, 4 June 2014
(2014-06-04), pages 1880 - 1885, XP032621910,
ISSN: 0743-1619, [retrieved on 20140717], DOI:
10.1109/ACC.2014.6859100**

**Beschreibung**

Die Erfindung betrifft ein Verfahren zum Einbetten von Sensordaten, insbesondere von lokalen Daten zu Seitenabständen eines Fahrzeugs, in eine Karte, insbesondere in eine geographische Übersichtskarte. Ferner betrifft die Erfindung ein System zum Durchführen des erfindungsgemäßen Verfahrens, aufweisend ein zum Durchführen von Verfahrensschritten des erfindungsgemäßen Verfahrens eingerichtetes Kraftfahrzeug und einen zum Durchführen von Verfahrensschritten des erfindungsgemäßen Verfahrens eingerichteten Netzwerkserver.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein automatisch fahrendes Fahrzeug, welches vollständig ohne Eingriffe eines Menschen manövrieren kann. Als Projektion von Fahrerassistenzsystemen führt automatisches Fahren zum vollautomatisierten Personentransport. Darüber hinaus findet das automatische Fahren insbesondere bei Parkvorgängen Anwendung, bei denen die durch Sensoren ermöglichte exakte Kenntnis der Fahrzeugumgebung sowie das hochpräzise Durchführen automatischer Fahrmanöver besonders vorteilhaft sind.

Für automatische Parkvorgänge eines Fahrzeugs kommen bislang vor allem Sensoren des Fahrzeugs zum Einsatz, welche das Erfassen von Abständen ermöglichen. Anhand dieser erfassten Abstände lassen sich sowohl die Größe von Parkpositionen als auch die Freiheitsgrade des Fahrzeugs zum Manövrieren ermitteln. Gängige Einparkassistenten erfordern beispielsweise ein zumindest einmaliges Vorbeifahren an einer leeren Parklücke, um eine Größe der leeren Parklücke zu erfassen und, basierend auf der so erfassten Größe der Parklücke, einen automatischen Einparkvorgang in diese Parklücke durchzuführen.

Aus dem Stand der Technik ist es ferner bekannt, die von einem Fahrzeug erfassten Informationen zu freien Parkplätzen auch weiteren Fahrzeugen zur Verfügung zu stellen. So übermitteln beispielsweise Fahrzeuge nach dem Ausparken ihre letzte Parkposition als GPS-Koordinate mit einem Zeitstempel an einen Netzwerkserver, woraufhin der Netzwerkserver diese Position für eine bestimmte Zeit als freie Parklücke an andere Fahrzeuge meldet.

Aus der DE 10 2017 204 455 A1 ist ferner ein Verfahren zum Sammeln von Informationen zu verfügbaren Parkplätzen bekannt, in dem mittels einer Sensoreinrichtung eines Fahrzeugs stehende Fahrzeuge erfasst werden. Die Position der erfassten stehenden Fahrzeuge wird dann als mögliche Parkposition in eine Karte übernommen, gegebenenfalls nach einer Plausibilisierung der Rechtmäßigkeit der Parkposition. Diese Karte wird Fahrzeugen, die nach Parkmöglichkeiten suchen, zur Verfügung gestellt, so dass diese einfacher eine Parkmöglichkeit auffinden können. Ein ähnliches Verfahren, allerdings zum Erfassen einer Orientierung von Parklücken, ist ferner in der DE 10 2009 029 553 A1 beschrieben. Dabei werden Tiefeninformationen zu seitlichen Abständen des Fahrzeugs mittels einer Abstandssensorvorrichtung detektiert und durch Vergleich mit vordefinierten Werten, beispielsweise zu einer mittleren Fahrzeugbreite und -länge, entweder einer quer oder einer längs zur Fahrbahn orientierten Parklücke zugeordnet. Gemäß der beiden vorgenannten Verfahren erfolgt eine Zuordnung von detektierten Parkplatz(orientierungs)informationen zu einer Karte allein anhand der aktuellen GPS-Koordinaten des erfassenden Fahrzeugs.

Nachteilig ist die Zuordnung der von einem Fahrzeug erfassten Sensorwerte zu einer Übersichtskarte allein anhand von GPS-Koordinaten nicht ausreichend genau, um die so angereicherten Kartendaten sinnvoll für einen Einparkassistenten zu nutzen. Beispielsweise ist eine Genauigkeit der angereicherten Kartendaten in einer Größenordnung von ca. 50 cm erforderlich, um eine präzise Zuordnung von spezifischen Fahrzeugtypen und Parkplätzen zu ermöglichen. Dies ist mit allein anhand der GPS-Koordinaten verknüpften Daten nicht möglich.

Die Veröffentlichung von ROGERS JOHN G ET AL: "Mapping with a ground robot in GPS denied and degraded environments", 2015 AMERICAN CONTROL CONFERENCE (ACC), IEEE offenbart ein Verfahren zur Rücktransformation von Sensorwerten zu GPS-Positionen zugeordneten Sensorwerten zur Lokalisierung eines Roboters bei teilweiser Abwesenheit von GPS, jedoch ohne Zusammenhang zu Straßenverkehrssituationen oder Übersichtskarten.

Die US 2018/0364349 A1 offenbart das Erstellen von lokalen Referenzdaten, insbesondere Tiefendaten, zur Einbettung in digitale Kartendaten, wodurch eine Lokalisierung des Fahrzeugs mittels der digitalen Kartendaten verbessert werden soll, indem das Fahrzeug - zusätzlich zu einem Abgleich von seinen aktuellen GPS Koordinaten mit der Karte - ferner einen Abgleich von aktuell erfassten lokalen Referenzdaten, insbesondere Tiefendaten, mit den in der Karte eingebetteten Tiefendaten vornimmt, um seine Position auf der Karte zu verifizieren. Die DE 102016212629 A1 offenbart ein Verfahren und eine Vorrichtung zum automatisierten oder teilautomatisierten Parken eines Kraftfahrzeugs, wobei das Kraftfahrzeug dazu ausgebildet ist, während des Abfahrens eines Pfades Parklücken zu erfassen, diese einem Nutzer anzubieten und nach Auswahl der Parklücke automatisiert oder teilautomatisiert in diese zu rangieren.

Es ist daher die Aufgabe der Erfindung, die Nachteile des Standes der Technik zu überwinden oder zumindest zu verringern und ein Verfahren zum Einbetten von Sensordaten in Kartendaten bereitzustellen, wobei das Verfahren eine präzise Zuordnung der von einem Fahrzeug lokal erfassten Sensorwerte zu einer geographischen Übersichtskarte ermöglicht.

Diese Aufgabe wird gelöst durch die Gegenstände der unabhängigen Patentansprüche. Bevorzugte Weiterbildungen sind Gegenstand der rückbezogenen Unteransprüche.

Ein erster Aspekt der Erfindung betrifft ein Verfahren zum Einbetten von Sensordaten in eine Karte, besonders bevorzugt von durch ein Kraftfahrzeug erfassten Ultraschalldaten in eine geographische Karte. Das erfindungsgemäße Verfahren zielt somit darauf ab, die mit Bezug zu einem Fahrzeug lokal erfassten Sensordaten durch Einbettung in eine Übersichtskarte auch anderen Fahrzeugen beziehungsweise Nutzern zur Verfügung zu stellen. Die hierfür erfindungsgemäß notwendigen Verfahrensschritte werden im Folgenden im Detail beschrieben.

In einem Verfahrensschritt des erfindungsgemäßen Verfahrens wird eine Fahrzeugeigenbewegung in einem lokalen Bezugssystem des Kraftfahrzeugs ermittelt. Mit anderen Worten wird eine Fahrzeugeigenbewegung als Zeitreihe von Positionen relativ zueinander ermittelt. Die Fahrzeugeigenbewegung beschreibt somit die relative Lageveränderung des Kraftfahrzeugs im Raum, bevorzugt in kartesischen Koordinaten. Eine absolute Einordnung der Fahrzeugeigenbewegung in den Raum ist hierfür jedoch nicht notwendig. Ist zu einem gewissen Zeitpunkt beispielsweise die Richtung und Geschwindigkeit des Fahrzeugs bekannt, kann daran die Lageveränderung und somit die relative Position des Fahrzeugs zu einem späteren Fahrzeug ermittelt werden. Somit können bereits Informationen zu Richtung und Geschwindigkeit des Fahrzeugs, zumindest insofern diese für eine Mehrzahl von Zeitpunkten vorhanden sind, repräsentativ für eine Fahrzeugeigenbewegung sein. Die Fahrzeugeigenbewegung stellt somit eine Trajektorie des Fahrzeugs im lokalen Bezugssystem dar, wird jedoch zur begrifflichen Abgrenzung als Fahrzeugeigenbewegung bezeichnet.

Im erfindungsgemäßen Verfahren erfolgt ferner eine Transformation zumindest einer GPS-Position des Kraftfahrzeugs, bevorzugt einer Mehrzahl von GPS-Positionen des Kraftfahrzeugs, in das lokale Bezugssystem des Kraftfahrzeugs. Dies beinhaltet insbesondere die Transformation einer Mehrzahl von GPS-Koordinaten in relative Positionen im lokalen Bezugssystem des Kraftfahrzeugs. Eine absolute Einordnung der transformierten GPS-Positionen im Raum ist dabei jedoch nicht erforderlich, durch die Verknüpfung der transformierten GPS-Koordinaten mit den ursprünglichen GPS-Koordinaten jedoch gegeben. Bevorzugt werden jede der zumindest einen GPS-Position kartesische Koordinate des lokalen Bezugssystems, insbesondere eines lokalen euklidischen Bezugssystems, zugeordnet. Die Transformation der GPS-Koordinaten kann im erfindungsgemäßen Verfahren vor oder nach dem Ermitteln der Fahrzeugeigenbewegung im lokalen Bezugssystem des Fahrzeugs erfolgen.

Die Transformation beziehungsweise das Einbetten der GPS-Koordinaten in das lokale Bezugssystem, bevorzugt ein lokales Euklidisches Koordinatensystem, ermöglicht vorteilhaft den Abgleich mit der Fahrzeugeigenbewegung. Das Einbetten beziehungsweise die Transformation erfolgt durch die Linearisierung des Zusammenhangs zwischen einer dreidimensionalen Position und geographischen Koordinaten. Damit werden Längen- und Breitengrade in lokale Koordinaten, zumindest in x, y und gegebenenfalls z Werte, übersetzt.

Im erfindungsgemäßen Verfahren erfolgt ferner das Verknüpfen der Fahrzeugeigenbewegung des Kraftfahrzeugs mit der zumindest einen GPS-Position zu einer Fahrzeugtrajektorie im lokalen Bezugssystem des Kraftfahrzeugs. Mit anderen Worten werden die Fahrzeugeigenbewegung und die GPS-Koordinaten im lokalen Bezugssystem überlagert beziehungsweise aneinander gefittet, um eine Fahrzeugtrajektorie im lokalen Bezugssystem zu ermitteln, welche die Fahrzeugeigenbewegungen darstellt und welche die geringsten Abstände zu den transformierten GPS-Koordinaten aufweist. Bevorzugt formen die ins lokale Bezugssystem transformierten GPS-Koordinaten, besonders bevorzugt die kartesischen Koordinaten zumindest einer GPS-Position, einen Bestandteil der Fahrzeugtrajektorie.

Das Verknüpfen der Fahrzeugeigenbewegung, die beispielsweise auch Höhenänderungen umfassen kann, mit den ursprünglich in Form von Koordinaten auf die Erdoberfläche bezogenen transformierten GPS-Koordinaten, umfasst bevorzugt eine geometrische Drehung und/oder Stauchung der Fahrzeugeigenbewegung im lokalen Bezugssystem zum Überlagern derselben mit den ins lokale Bezugssystem transformierten GPS-Koordinaten. Dem Fachmann sind Verfahren zum Überlagern (Matchen/Fitten) einer Trajektorie in einem Koordinatensystem an eine Mehrzahl von Stützpunkten (transformierte GPS-Koordinaten) bekannt.

Im erfindungsgemäßen Verfahren erfolgt ferner ein Verknüpfen lokaler Sensordaten mit der Fahrzeugtrajektorie. Die lokalen Sensordaten werden dabei stets vom Fahrzeug selbst erfasst und folgen somit stets der Fahrzeugeigenbewegung im lokalen Bezugssystem. Die lokalen Sensordaten weisen mittels zumindest eines Abstandssensors des Kraftfahrzeugs erfasste lateraler Abstandwerte auf. Die gemessenen Abstandswerte sind stets auf eine Position des Sensors im Fahrzeug bezogen, der sich entsprechend der Fahrzeugeigenbewegung im lokalen Bezugssystem bewegt. Indem die Fahrzeugeigenbewegung mit den GPS-Koordinaten zur Fahrzeugtrajektorie verknüpft wurde, besteht somit im erfindungsgemäßen Verfahren vorteilhaft die Möglichkeit, die Sensordaten auf eine an die transformierten GPS-Koordinaten gefittete Trajektorie zu beziehen. Die Verknüpfung der lokalen Sensordaten mit der Fahrzeugtrajektorie ermöglicht somit vorteilhaft das Erzeugen lokalisierter Sensorwerte im lokalen Bezugssystem des Kraftfahrzeugs, wobei die lokalisierten Sensorwerte nunmehr auf die transformierten GPS-Koordinaten bezogen sind.

Im erfindungsgemäßem Verfahren erfolgt ferner eine Rücktransformation der lokalisierten Sensorwerte, indem die transformierten GPS-Koordinaten auf reguläre GPS-Koordinaten zurücktransformiert werden. Die mathematische Operation zur Transformation der transformierten GPS-Koordinaten auf reguläre GPS-Koordinaten entspricht bevorzugt dem Inversen der Operation zur Transformation der GPS-Koordinaten ins lokale Bezugssystem. Die mathematische Operation zur Transformation der transformierten GPS-Koordinaten auf reguläre GPS-Koordinaten wird in gleicher Weise auf die restlichen Koordinaten der Fahrzeugtrajektorie angewendet, um somit alle Punkte der Fahrzeugtrajektorie in hoch aufgelösten GPS-Koordinaten darzustellen. Indem jeder Punkt der Fahrzeugtrajektorie mit lokalen Sensorwerten verknüpft war, sind die lokalen Sensorwerte nunmehr mit hoch aufgelösten GPS-Koordinaten verknüpft. Ein solcher Datensatz lokal globalisierter Sensorwerte ist vorteilhaft geeignet, um die lokalen Sensorwerte in eine geographische Karte einzubetten.

In einer bevorzugten Durchführungsform des erfindungsgemäßen Verfahrens werden die lokalen Sensordaten durch zumindest einen ersten Sensor eines Kraftfahrzeugs im lokalen Bezugssystem des Kraftfahrzeugs und relativ zum Kraftfahrzeug erfasst. Die ersten Sensoren sind dabei zum Erfassen von die Umgebung des Fahrzeugs beschreibenden Umgebungsdaten ausgebildet. Bei den lokalen Sensordaten handelt es sich um mittels zumindest eines Abstandssensors, insbesondere Ultraschallsensors, erfasste laterale Abstandwerte des Kraftfahrzeugs. Diese Abstandswerte definieren dabei den seitlichen Abstand des Kraftfahrzeugs zu umgebenden Objekten. Somit können beispielsweise freie Parklücken am Straßenrand neben dem Fahrzeug präzise erfasst werden. Durch präzise Einbettung dieser Abstandswerte in eine geographische Karte, werden diese Informationen auch weiteren Nutzern beziehungsweise Fahrzeugen zur Verfügung gestellt. Aufgrund der hohen Präzision der Einbettung kann ein empfangenes Fahrzeug entscheiden, beispielsweise anhand seiner Größe, ob die in der Karte verzeichnete Parklücke ausreicht.

In einer alternativen Ausgestaltung des erfindungsgemäßen Verfahrens zum Einbetten von lokalen Sensordaten in eine Karte, weist dieses die folgenden Verfahrensschritte auf. Zunächst wird wiederrum zumindest eine GPS-Position des Kraftfahrzeugs ermittelt. Ebenso wird eine Fahrzeugeigenbewegung in einem lokalen Bezugssystem des Kraftfahrzeugs ermittelt. Diese Schritte unterscheiden sich somit nicht von der zuvor beschriebenen Variante des erfindungsgemäßen Verfahrens. Ferner erfolgt gemäß dieser Durchführungsform das Verknüpfen lokaler Sensordaten mit der Fahrzeugeigenbewegung zu lokalisierten Sensorwerten im lokalen Bezugssystem des Kraftfahrzeugs, ebenfalls wie obenstehend beschrieben.

Im Gegensatz zu dem zuvor beschriebenen Verfahren erfolgt jedoch nun eine Transformation der Fahrzeugeigenbewegung in geographische Koordinaten. Diese Transformation ist dabei bevorzugt die Inverse der zuvor beschriebenen Transformation von geographischen Koordinaten in das lokale Bezugssystem. Ferner erfolgt gemäß dieser Durchführungsform das Verknüpfen der transformierten Fahrzeugeigenbewegung des Kraftfahrzeugs mit der zumindest einen GPS-Position zu einer Fahrzeugtrajektorie in geographischen Koordinaten. Mit anderen Worten erfolgt gemäß dieser Durchführungsform das Verknüpfen der lokalen und globalen Bewegung im geographischen Koordinatenraum. Diese so ermittelte Fahrzeugtrajektorie wird wiederrum mit den lokalisierten Sensorwerten verknüpft, um zu GPS-Positionen zugeordnete globalisierte Sensorwerten zu ermitteln. Die hier beschriebene Durchführungsform stellt somit einen zum Teil invertierten Ablauf des erfindungsgemäßen Verfahrens dar. Im Folgenden werden bevorzugte Durchführungsformen aus Gründen der Übersichtlichkeit lediglich mit Bezug zu der ersten Durchführungsform beschrieben, gelten jedoch in gleicher Weise für die hier beschriebene teilweise invertierte Durchführungsform des Verfahrens.

In einer bevorzugten Durchführungsform des erfindungsgemäßen Verfahrens wird die Fahrzeugeigenbewegung anhand von Messwerten zumindest eines zweiten Sensors des Kraftfahrzeugs ermittelt. Die zweiten Sensoren sind dabei dazu ausgebildet, einen Zustand des Fahrzeugs beschreibende Fahrzeugdaten zu erfassen. In einer besonders bevorzugten Durchführungsform umfassen die zweiten Sensoren Raddrehzahlsensoren und erfolgt ein Ermitteln der Fahrzeugeigenbewegung im lokalen Bezugssystem durch Rekonstruktion der Fahrzeugeigenbewegung anhand der für eine Fahrzeugachse gemessenen Raddrehzahlen.

Besonders bevorzugt wird die Fahrzeugeigenbewegung ermittelt, in dem die gemessenen Raddrehzahlen $v_r$ und $v_l$ in Umdrehungsgeschwindigkeiten der Hinterräder in Metern pro Sekunde umgerechnet werden. Zum Bestimmen der Umdrehungsgeschwindigkeit wird bevorzugt ein gemessener Reifenumfang $\gamma_r$, $\gamma_l$ verwendet, welcher in der Praxis stark von dem realen Reifenumfang abweichen kann. Um diese Diskrepanz auszugleichen können Korrekturfaktoren genutzt werden. Mit einer zusätzlichen Information über die Länge b einer Hinterachse kann die lokale Trajektorie der Fahrzeugeigenbewegung integriert werden. Mit dem Eulerverfahren ergeben sich die entsprechenden Gleichungen zur Integration der Trajektorie wie folgt:

$$\phi(x+t) = \phi(x) + \Delta t \frac{\gamma_l v_l - \gamma_r v_r}{b}$$

$$x(t+1) = x(t) + \Delta t \frac{\gamma_l v_l + \gamma_r v_r}{2} \cos \phi(t)$$

$$y(t+1) = y(t) + \Delta t \frac{\gamma_l v_l \overline{+} \gamma_r v_r}{2} \sin \phi(t)$$

Die so ermittelte Fahrzeugeigenbewegung ist dabei für ein nicht bekanntes Koordinatensystem bestimmt, insbesondere da die Anfangsposition und Anfangsorientierung der Fahrzeugeigenbewegung im Raum nicht bekannt sind. In einer bevorzugten Durchführungsform des erfindungsgemäßen Verfahrens werden diese Faktoren im Zug der Verknüpfung der Fahrzeugeigenbewegung mit den transformierten GPS-Koordinaten bestimmt. Besonders bevorzugt wird eine anfängliche GPS-Position zu einem Zeitpunkt $t_0$ als Startpunkt der Entwicklung der lokalen Fahrzeugeigenbewegung von $X_0 = X(t_0)$ verwendet, und wird die anfängliche Orientierung der Fahrzeugeigenbewegung so bestimmt, dass die Fahrzeugeigenbewegung im Mittel der GPS-Bewegung folgt, sprich die transformierten GPS-Koordinaten schneidet oder nahe passiert. Ein solcher Ansatz ist für völlig flache Geometrien ausreichend. Zum Berücksichtigen von Höhenunterschieden ist gegebenenfalls eine Stauchung der Fahrzeugeigenbewegung notwendig. Ferner ist bei dem Verknüpfen einer anhand der obigen Gleichungen bestimmten Fahrzeugeigenbewegung mit den GPS-Koordinaten im lokalen Bezugssystem der Abstand des GPS-Sensors zur Fahrzeughinterachse zu berücksichtigen.

Erfindungsgemäß sind die lokalen Sensorwerte jeweils mit einem Zeitstempel versehen. In einer ebenfalls bevorzugten Durchführungsform sind auch die GPS-Koordinaten und die Daten zur Fahrzeugeigenbewegung jeweils mit einem Zeitstempel versehen. Ein Verknüpfen der kartesischen Koordinaten einer GPS-Position mit der Fahrzeugeigenbewegung erfolgt somit bevorzugt anhand zumindest eines Zeitstempels. Ebenso bevorzugt erfolgt das Verknüpfen zumindest eines lokalen Sensorwerts mit der Fahrzeugeigenbewegung bevorzugt anhand eines Zeitstempels. Somit kann auch die Zuordnung der lokalen Sensorwerte zur Fahrzeugtrajektorie anhand der Zeitstempel erfolgen.

Ein weiterer Aspekt der Erfindung betrifft einen Netzwerkserver, aufweisend ein zur Datenkommunikation mit einer Mehrzahl von Kraftfahrzeugen eingerichtetes zweites Kommunikationsmodul und eine zweite Steuereinheit. Der Netzwerkserver weist ferner eine zweite Steuereinheit auf, die dafür eingerichtet ist, mittels eines zweiten Kommunikationsmodul mit dem ersten Kommunikationsmodul zumindest eines Kraftfahrzeugs zu kommunizieren. Die Steuereinheit ist ferner dafür eingerichtet, die Schritte des Netzwerkservers in dem erfindungsgemäßen Verfahren durchzuführen und ist insbesondere dafür eingerichtet, jeweils mit einem Zeitstempel versehene lokale Sensordaten, Fahrzeugbewegungsdaten und zumindest eine GPS-Position von zumindest einem Kraftfahrzeug zu empfangen, wobei die lokalen Sensordaten mittels zumindest eines Abstandssensors des Kraftfahrzeugs erfasste lateraler Abstandwerte aufweisen.

Die Steuereinheit des Netzwerkservers ist ferner dazu eingerichtet, der zumindest einen GPS-Position kartesische Koordinaten eines lokalen Bezugssystems des Kraftfahrzeugs zuzuordnen. Das lokale Bezugssystem des Kraftfahrzeugs ist dabei beispielsweise ein unbekanntes Bezugssystem oder Koordinatensystem mit festgelegter Metrik aber ohne festen Ursprung. Die Zuordnung erfolgt insbesondere durch Umrechnen der geographischen Koordinaten in kartesische Koordinaten und Abstände. Die Steuereinheit ist ferner dazu eingerichtet, in dem lokalen Bezugssystem des Kraftfahrzeugs eine Fahrzeugeigenbewegung des Kraftfahrzeugs anhand der Fahrzeugbewegungsdaten zu rekonstruieren. Die Rekonstruktion erfolgt dabei bevorzugt mittels Streckenzugverfahren und entsprechenden Bewegungsgleichungen, wie obenstehend am Beispiel von Raddrehzahlen und Eulergleichungen erläutert. Die Steuereinheit ist ferner dafür eingerichtet, die so ermittelte Fahrzeugeigenbewegung mit der zumindest einen transformierten GPS-Position zu einer Fahrzeugtrajektorie zu verknüpfen. Die Steuereinheit des Netzwerkservers ist ferner dazu eingerichtet, die lokalen Sensordaten mit der Fahrzeugtrajektorie zu lokalisierten Sensorwerten zu verknüpfen. Das Verknüpfen erfolgt bevorzugt wie jeweils obenstehend erläutert, besonders bevorzugt mittels Zeitstempeln. Die Steuereinheit ist ferner dafür eingerichtet, die lokalisierten Sensorwerte zu GPS-Positionen zugeordneten Sensorwerten (globalisierte Sensorwerte) zurückzutransformieren und die globalisierten Sensorwerte in eine Karte einzubetten.

In einer alternativen Ausführungsform ist die Steuereinheit des Netzwerkservers alternativ oder zusätzlich dazu ausgebildet, die lokalen Sensordaten mit in einem lokalen Bezugssystem des Kraftfahrzeugs ermittelten kartesischen Koordinaten der Fahrzeugbewegungsdaten zu lokalisierten Sensordaten zu verknüpfen, die kartesischen Koordinaten der Fahrzeugbewegungsdaten in GPS-Positionen zu transformieren, der transformierten Fahrzeugeigenbewegung des Kraftfahrzeugs mit zumindest einer GPS-Position zu einer Fahrzeugtrajektorie in geographischen Koordinaten zu verknüpfen und die lokalisierten Sensordaten mittels der Fahrzeugtrajektorie in globale Sensordaten zu transformieren. Diese Ausführungsform ist wie bereits mit Bezug zum erfindungsgemäßen Verfahren beschrieben, für eine Durchführung einer zum Teil inversen Durchführungsform des erfindungsgemäßen Verfahrens ausgebildet, was für den Fachmann eine einfache Anpassung darstellt.

Erfindungsgemäß ist die Steuereinheit des Netzwerkservers ferner dazu ausgebildet, die so erhaltenen globalisierten Sensorwerte in eine geographische Karte einzubetten. Diese Karte enthält somit lediglich GPS-Koordinaten und den GPS-Koordinaten zugeordnete Sensorwerte, beispielsweise zu seitlichen Abständen von einer Fahrspur, oder enthält bereits daraus abgeleitete Informationen, beispielsweise zu freien Stellplätzen. Vorteilhaft müssen lokale Sensorwerte eines Fahrzeugs somit nicht mehr im Kontext weiterer Sensordaten, beispielsweise zur Odometrie des erfassenden Fahrzeugs, weitergeleitet werden. Somit wird die Datenübertragung optimiert und die Privatsphäre der Nutzer besser geschützt.

In einer alternativ bevorzugten Durchführungsform wird die Karte mit den eingebetteten globalisierten Sensorwerten oder werden die globalisierten Sensorwerte von einem Fahrzeug selbst erzeugt. In diesem Fall empfängt der Server die Karte oder die globalisierten Sensorwerte und übermittelt diese an andere Fahrzeuge. Die Erzeugung der Karte im Netzwerkserver hat den vorteilhaften Effekt, dass die lokalen Sensorwerte von einer Mehrzahl von Fahrzeugen genutzt werden können, um die Karte mit eingebetteten Informationen zu erzeugen. Ferner bevorzugte Ausführungsformen der Steuereinheit des Netzwerkservers entsprechen den mit Bezug zum erfindungsgemäßen Verfahren erläuterten bevorzugten Durchführungsformen.

Ein weiterer Aspekt der Erfindung betrifft ein Verfahren eines Netzwerkservers eines Kraftfahrzeugs, welcher zumindest einen Speicher, ein zur Kommunikation mit einem ersten Kommunikationsmodul zumindest eines Kraftfahrzeugs eingerichtetes zweites Kommunikationsmodul, sowie die zweite Steuereinheit aufweist, wobei das Verfahren zumindest die folgenden Schritte aufweist: Empfangen jeweils mit einem Zeitstempel versehener lokaler Sensordaten, Fahrzeugbewegungsdaten und zumindest einer GPS-Position von einem Kraftfahrzeug, wobei die lokalen Sensordaten mittels zumindest eines Abstandssensors des Kraftfahrzeugs erfasste laterale Abstandwerte aufweisen, Zuordnen der zumindest einen GPS-Position zu kartesischen Koordinaten eines lokalen Bezugssystems des Kraftfahrzeugs, Rekonstruieren einer Fahrzeugeigenbewegung des Kraftfahrzeugs in dem lokalen Bezugssystem des Kraftfahrzeugs anhand der Fahrzeugbewegungsdaten, Verknüpfen der Fahrzeugeigenbewegung und zumindest einer transformierten GPS-Position zu einer Fahrzeugtrajektorie, Verknüpfen der lokalen Sensordaten mit der Fahrzeugtrajektorie zu lokalisierten Sensorwerten, Rücktransformation der lokalisierten Sensorwerte zu GPS-Positionen zugeordneten globalisierten Sensorwerten und Einbetten der globalisierten Sensordaten in eine Karte.

Ein weiterer Aspekt der Erfindung betrifft ein Computerprogramm, umfassend Befehle, die bei der Ausführung des Programms durch einen Computer, wie beispielsweise eine Steuereinheit eines Netzwerkservers, diesen veranlassen, die Schritte des Netzwerkservers im erfindungsgemäßen Verfahren durchzuführen, insbesondere die Schritte: Empfangen jeweils mit einem Zeitstempel versehener lokaler Sensordaten, Fahrzeugbewegungsdaten und zumindest einer GPS-Position von einem Kraftfahrzeug, Zuordnen der zumindest einen GPS-Position zu kartesischen Koordinaten eines lokalen Bezugssystems des Kraftfahrzeugs, Rekonstruieren einer Fahrzeugeigenbewegung des Kraftfahrzeugs in dem lokalen Bezugssystem des Kraftfahrzeugs anhand der Fahrzeugbewegungsdaten, Verknüpfen der Fahrzeugeigenbewegung und zumindest einer transformierten GPS-Position zu einer Fahrzeugtrajektorie, Verknüpfen der lokalen Sensordaten mit der Fahrzeugtrajektorie zu lokalisierten Sensorwerten, Rücktransformation der lokalisierten Sensorwerte zu GPS-Positionen zugeordneten globalisierten Sensorwerten und Einbetten der globalisierten Sensorwerte in eine Karte.

Ein weiterer Aspekt der Erfindung betrifft ein Kraftfahrzeug, insbesondere einen zum Durchführen der Schritte eines Kraftfahrzeugs im erfindungsgemäßen Verfahren eingerichteten Personenkraftwagen mit Verbrennungs-, Elektro- oder Hybridmotor. Das Kraftfahrzeug weist hierfür zumindest einen zum Erfassen von Umgebungsdaten eingerichteten ersten Sensor und zumindest einen zum Erfassen von Fahrzeugdaten eingerichteten zweiten Sensor auf.

Der zumindest eine erste Sensor ist dabei dazu ausgebildet, die Umgebung des Fahrzeugs betreffende Sensorsignale zu erfassen und umfasst zumindest einen zum Erfassen lateraler Abstandwerte eingerichteten Abstandssensor. Der zumindest eine zweite Sensor ist dabei dazu ausgebildet, das Fahrzeug selbst betreffende Sensorsignale zu erfassen. Das Kommunikationsmodul ist dabei dazu ausgebildet, das Kraftfahrzeug und/oder dessen Umgebung potentiell betreffende Informationen über ein Kommunikationsnetzwerk zu empfangen. Dabei versetzt ein mittels des zumindest einen ersten Sensors empfangenes Umgebungssignal das Kraftfahrzeug bevorzugt in die Lage, sich über seine Umgebung zu informieren und bildet bevorzugt eine Vielzahl von Umweltinformationen ab. Ein mittels des zumindest einen zweiten Sensors empfangenes Zustandssignal versetzt das Kraftfahrzeug bevorzugt in die Lage, sich über seinen Eigenzustand zu informieren und bildet dazu bevorzugt eine Vielzahl von Zustandsinformationen des Kraftfahrzeugs ab.

Das erfindungsgemäße Kraftfahrzeug weist ferner ein zur Kommunikation mit einem Netzwerkserver und GPS-Satelliten eingerichtetes erstes Kommunikationsmodul auf. Darüber hinaus kann das Kommunikationsmodul zur Kommunikation mit weiteren Vorrichtungen, wie beispielsweise weiteren Fahrzeugen oder einer smarten Infrastruktur eingerichtet sein. Das Kommunikationsmodul weist bevorzugt einen Funk-, Mobilfunk-, WLAN-, und/oder Bluetooth-Transceiver oder alternative Drahtloskommunikationsgeräte auf.

Das Kraftfahrzeug weist ferner eine erste Steuereinheit auf, die dafür eingerichtet ist, mit dem zumindest einen ersten Sensor zum Erfassen von Umgebungsdaten eines Kraftfahrzeugs, mit dem zumindest einen zweiten Sensor zum Erfassen von Zustandsdaten des Kraftfahrzeugs und mit dem ersten Kommunikationsmodul des Kraftfahrzeugs zu kommunizieren. Die Steuereinheit ist ferner dafür eingerichtet, die Schritte des Kraftfahrzeugs in dem erfindungsgemäßen Verfahren durchzuführen. Die erste Steuereinheit ist insbesondere dazu ausgebildet, eine Karte mit zu GPS-Positionen zugeordneten Sensorwerten mittels des ersten Kommunikationsmoduls von dem Netzwerkserver zu empfangen und anhand der empfangenen Karte mit zu GPS-Positionen zugeordneten Sensorwerten zumindest ein automatisches Fahrmanöver durchzuführen. Gemäß dieser Ausführungsform wurden die globalisierten Sensorwerte oder zumindest die Karte mit den globalisierten Sensorwerten vom Server erzeugt.

Gemäß einer solchen Ausführungsform ist die Steuereinheit dennoch bevorzugt dafür eingerichtet mittels zumindest eines ersten Sensors lokale Sensordaten im lokalen Bezugssystem des Kraftfahrzeugs relativ zum Kraftfahrzeug zu erfassen, mittels zumindest eines zweiten Sensors eine Eigenbewegung des Kraftfahrzeugs im lokalen Bezugsystem charakterisierende Fahrzeugbewegungsdaten zu erfassen und mittels des ersten Kommunikationsmoduls zumindest eine GPS-Position des Kraftfahrzeugs zu erfassen. Ferner ist die Steuereinheit dafür eingerichtet, die lokalen Sensordaten, die Fahrzeugbewegungsdaten und die zumindest eine GPS-Position an einen Netzwerkserver zu übermitteln, wobei die lokalen Sensordaten, die Fahrzeugbewegungsdaten und die zumindest eine GPS-Position bevorzugt jeweils mit einem Zeitstempel versehen sind. Ebenfalls bevorzugt erfolgt die Übermittlung in einer gemeinsamen Datenstruktur.

Erfindungsgemäß betreffen die von einem Fahrzeug erfassten und übermittelten Sensordaten seitliche Abstandswerte, die beispielsweise mittels eines Ultraschallsensors erfasst wurden. Ebenfalls bevorzugt enthält die von einem Fahrzeug empfangene Karte eingebettete globalisierte Sensorwerte, bevorzugt von einer Mehrzahl von Fahrzeugen, zu seitlichen Abstandswerten oder enthält die Karte aus solchen Abstandswerten abgeleitete und in die Karte eingebettete Informationen zu freien Parkplätzen entlang von Straßen.

In einer besonders bevorzugten Ausführungsform weist das erfindungsgemäße Kraftfahrzeug ferner ein zum automatischen Fahren des Kraftfahrzeugs eingerichtetes Fahrsystem auf. Das Fahrsystem des erfindungsgemäßen Kraftfahrzeugs ist bevorzugt dafür eingerichtet, zumindest ein automatisches Fahrmanöver/eine automatische Fahrt des Fahrzeugs durchzuführen. Besonders bevorzugt ist das Fahrsystem zur vollständig automatischen Führung des Kraftfahrzeugs ausgebildet und kann die Längsführung sowie die Querführung des Kraftfahrzeugs steuern. Ferner bevorzugt kann das Fahrsystem auf den zumindest einen ersten Sensor und/oder auf den zumindest einen zweiten Sensor zum Bestimmen von Zustandsinformationen und/oder von Umgebungsinformationen des Kraftfahrzeugs zugreifen. Diese ersten und zweiten Sensoren sind somit bevorzugt von dem Fahrsystem und von der Steuereinheit nutzbar.

Besonders bevorzugt ist die Steuereinheit des Fahrzeugs dazu ausgebildet, das Fahrsystem zum Durchführen zumindest eines automatischen Fahrmanövers unter Verwendung der empfangenen Karte mit globalisierten Sensorwerten oder daraus abgeleiteten Informationen zu verwenden. Besonders bevorzugt umfasst das automatische Fahrmanöver das Durchführen einer automatischen Fahrt zu einer Parklücke oder das automatische Einparken in eine Parklücke.

In einer ebenfalls bevorzugten Ausführungsform ist die Steuereinheit des Kraftfahrzeug selbst dazu ausgebildet, die globalisierten Sensorwerte zu erzeugen. Mit anderen Worten ist das erfindungsgemäße Kraftfahrzeug allein dazu ausgebildet, das erfindungsgemäße Verfahren durchzuführen. Gemäß dieser Ausführungsform ist die Steuereinheit des Kraftfahrzeugs insbesondere dazu ausgebildet, zumindest einer GPS-Position kartesische Koordinaten des lokalen Bezugssystems des Kraftfahrzeugs zuzuordnen, in dem lokalen Bezugssystem des Kraftfahrzeugs eine Fahrzeugeigenbewegung des Kraftfahrzeugs anhand der Fahrzeugbewegungsdaten zu rekonstruieren und mit der zumindest einen transformierten GPS-Position zu einer Fahrzeugtrajektorie zu verknüpfen, die lokalen Sensordaten, aufweisend mittels zumindest eines Abstandssensors des Kraftfahrzeugs erfasster lateraler Abstandwerte, mit der Fahrzeugtrajektorie zu lokalisierten Sensorwerten zu verknüpfen, die lokalisierten Sensorwerte zu GPS-Positionen zugeordneten globalisierten Sensorwerten zurückzutransformieren, und die globalisierten Sensorwerte in eine Karte einzubetten. Ferner bevorzugte Ausführungsformen des Kraftfahrzeugs entsprechen den mit Bezug zum erfindungsgemäßen Verfahren vorstehend erläuterten bevorzugten Durchführungsformen.

Gängige Kraftfahrzeuge weisen bereits heute eine Vielzahl von Sensoren auf, welche als erste Sensoren ständig verschiedene Umgebungsinformationen, wie beispielsweise seitliche Abstände zu parkenden Autos, erfassen. Ferner weisen heutige Fahrzeuge auch bereits zweite Sensoren zum Erfassen von Zustandsinformationen, wie beispielsweise Raddrehzahlen oder dergleichen auf. Moderne Fahrzeuge sind zudem mit leistungsfähigen Kommunikationsmodulen ausgestattet, welche die Übertragung von Informationen über eine Vielzahl von Kanälen ermöglichen. Das erfindungsgemäße Verfahren führt diese bereits vorhandenen Sensoren und das Kommunikationsmodul einer neuen vorteilhaften Verwendung zu.

Ein weiterer Aspekt der Erfindung betrifft ein Verfahren einer Steuereinheit eines Kraftfahrzeugs, welches zumindest einen zum Erfassen von Umgebungsdaten eingerichteten ersten Sensor, zumindest einen zum Erfassen von Zustandsdaten des Kraftfahrzeugs eingerichteten zweiten Sensor und ein Kommunikationsmodul, ein zum automatischen Fahren des Kraftfahrzeugs eingerichtetes Fahrsystem, sowie die Steuereinheit aufweist, wobei das Verfahren zumindest die folgenden Schritte aufweist: Empfangen einer Karte mit zu GPS-Positionen zugeordneten Sensorwerten mittels des ersten Kommunikationsmoduls von dem Netzwerkserver und Durchführen zumindest eines automatischen Fahrmanövers anhand der empfangenen Karte mit zu GPS-Positionen zugeordneten Sensorwerten.

Alternativ oder zusätzlich umfasst das Verfahren die Schritte: Erfassen lokaler Sensordaten im lokalen Bezugssystem des Kraftfahrzeugs relativ zum Kraftfahrzeug mittels zumindest eines ersten Sensors, Erfassen einer Eigenbewegung des Kraftfahrzeugs im lokalen Bezugssystem charakterisierender Fahrzeugbewegungsdaten mittels zumindest eines zweiten Sensors, Erfassen zumindest einer GPS-Position des Kraftfahrzeugs mittels des ersten Kommunikationsmoduls, Übermitteln der lokalen Sensordaten, der Fahrzeugbewegungsdaten und der zumindest einen GPS-Position an einen Netzwerkserver, bevorzugt in einer gemeinsamen Datenstruktur und bevorzugt zusammen mit jeweiligen Zeitstempeln.

Alternativ oder zusätzlich umfasst das Verfahren die Schritte: Zuordnen von kartesischen Koordinaten des lokalen Bezugssystems des Kraftfahrzeugs zu zumindest einer GPS-Position des Kraftfahrzeugs, Rekonstruieren einer Fahrzeugeigenbewegung des Kraftfahrzeugs anhand der Fahrzeugbewegungsdaten in dem lokalen Bezugssystem des Kraftfahrzeugs, Verknüpfen der Fahrzeugeigenbewegung mit den kartesischen Koordinaten der zumindest einen transformierten GPS-Position zu einer Fahrzeugtrajektorie, Verknüpfen der lokalen Sensordaten, aufweisend mittels zumindest eines Abstandssensors des Kraftfahrzeugs erfasster lateraler Abstandwerte, mit der Fahrzeugtrajektorie zu lokalisierten Sensorwerten, Rücktransformieren der lokalisierten Sensorwerte zu GPS-Positionen zugeordneten (globalisierten) Sensorwerten und Einbetten der globalisierten Sensorwerte in eine Karte.

Ein weiterer Aspekt der Erfindung betrifft ein Computerprogramm, umfassend Befehle, die bei der Ausführung des Programms durch einen Computer, wie beispielsweise eine Steuereinheit eines Kraftfahrzeug, dieses veranlassen, die Schritte der Steuereinheit des Kraftfahrzeugs im erfindungsgemäßen Verfahren durchzuführen.

Ein weiterer Aspekt der vorliegenden Erfindung betrifft ein System aus einem erfindungsgemäßen Kraftfahrzeug wie vorstehend beschrieben und einem erfindungsgemäßen Netzwerkserver wie vorstehend beschrieben. Bevorzugte Ausführungsformen des Systems entsprechen den mit Bezug zu dem Kraftfahrzeug und dem Server erläuterten bevorzugten Ausführungsformen beziehungsweise den bevorzugten Durchführungsformen der Verfahren.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul, sowie ein oder mehreren Sensoren beziehungsweise Kameras zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem erfindungsgemäßen Verfahren abzuweichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1     eine schematische Darstellung eines erfindungsgemäßen Systems aus einem erfindungsgemäßen Kraftfahrzeug und einem erfindungsgemäßen mobilen Netzwerkserver gemäß einer Ausführungsform; und

Figur 2     eine schematische Abfolge der Schritte eines erfindungsgemäßen Verfahrens gemäß einer Durchführungsform.

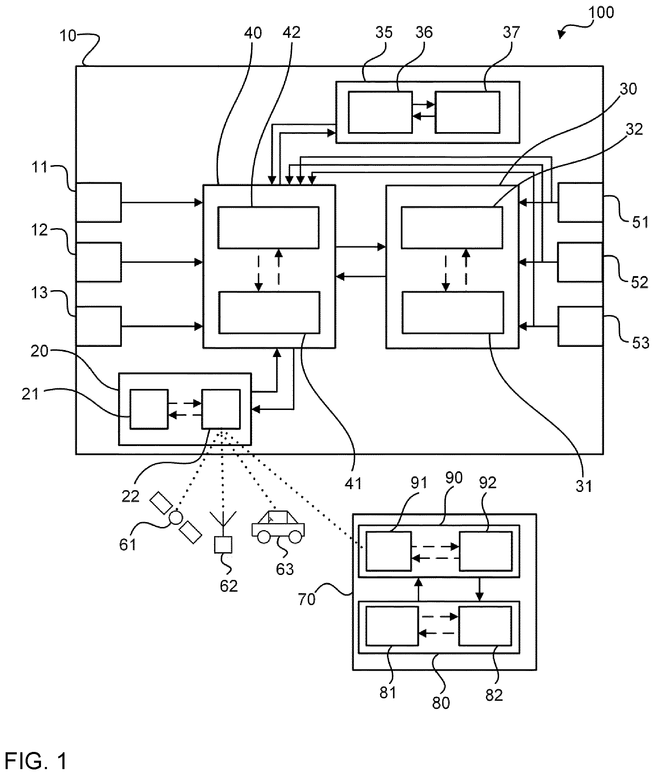

Figur 1 zeigt eine schematische Darstellung, insbesondere ein Blockdiagram eines beispielhaften Kraftfahrzeugs 10, insbesondere eines zweispurigen Kraftfahrzeugs mit Verbrennungs-, Elektro- oder Hybridmotor. Das Kraftfahrzeug 10 umfasst eine Vielzahl erster Sensoren, insbesondere einen ersten Sensor 11, einen zweiten Sensor 12, und einen dritten Sensor 13. Die ersten Sensoren 11, 12, 13 sind eingerichtet zum Erfassen von Umgebungsdaten des Kraftfahrzeugs 10 und umfassen insbesondere eine Kamera zum Erfassen eines Bildes einer das Kraftfahrzeug 10 unmittelbar umgebenden Umwelt und Abstandssensoren, insbesondere Ultraschallsensoren oder LIDAR, zum Erfassen von seitlichen Abständen zu das Kraftfahrzeug 10 umgebenden Objekten. Die ersten Sensoren 11, 12, 13 übertragen die von ihnen erfassten Umgebungssignale an eine erste Steuereinheit 40 des Kraftfahrzeugs 10.

Das Kraftfahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Kraftfahrzeug 10 selbst betreffenden Zustandsdaten, wie beispielsweise aktuelle Lage- und Bewegungsinformationen des Kraftfahrzeugs. Bei den zweiten Sensoren 51, 52, 53 handelt es sich folglich insbesondere um Geschwindigkeitssensoren, Beschleunigungssensoren, Neigungssensoren, Sensoren zum Messen einer Eintauchtiefe eines Stoßdämpfers und Raddrehzahlsensoren. Die zweiten Sensoren 51, 52, 53 übermitteln die von ihnen erfassten Zustandssignale an die erste Steuereinheit 40 des Kraftfahrzeugs 10. Darüber hinaus übermitteln die zweiten Sensoren 51, 52, 53 ihre Messergebnisse unmittelbar an das Fahrsystem 30 des Kraftfahrzeugs 10.

Das Kraftfahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder 22 kommuniziert mit dem internen Speicher 21 des ersten Kommunikationsmoduls 20, beispielsweise über einen geeigneten Datenbus. Mittels des Transponders 22 kann beispielsweise die aktuelle Position des Kraftfahrzeugs 10 durch Kommunikation mit einem GPS-Satelliten 61 ermittelt und diese im internen Speicher 21 gespeichert werden. Das erste Kommunikationsmodul 20 kommuniziert auch mit der ersten Steuereinheit 40. Darüber hinaus ist das erste Kommunikationsmodul 20 dafür eingerichtet, mit einem mobilen Netzwerkserver 70, insbesondere einem Backendserver eines Fahrzeugherstellers oder Flottenbetreibers zu kommunizieren. Die Kommunikation erfolgt dabei mit einem zweiten Kommunikationsmodul 90 des Netzwerkservers 70. Bevorzugt kommuniziert das erste Kommunikationsmodul 20 über ein LTE Mobilfunknetz.

Das Kraftfahrzeug 10 weist ferner das Fahrsystem 30 auf, das zum vollständig automatischen Fahrbetrieb, insbesondere zur Längs- und Querführung, des Kraftfahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Ferner kommuniziert das Fahrsystem 30 mit der Steuereinheit 40 und empfängt von der Steuereinheit 40 mittels des ersten Kommunikationsmoduls 20 von dem Netzwerkserver 70 empfangene Trajektorieinformationen. Bevorzugt ist das Navigationsmodul 32 dazu eingerichtet anhand dieser Trajektorieinformationen eine Route des Kraftfahrzeugs 10 zu ermitteln.

Zumindest ein Teil der zweiten Sensoren 51, 52, 53, des Kraftfahrzeugs übermittelt seine Messergebnisse direkt an das Fahrsystem 30. Bei diesen unmittelbar an das Fahrsystem 30 übermittelten Daten handelt es sich insbesondere um aktuelle Lage- und Bewegungsinformationen des Kraftfahrzeugs 10. Diese werden bevorzugt von Geschwindigkeitssensoren, Beschleunigungssensoren, Neigungssensoren, etc. erfasst.

Das Kraftfahrzeug 10 weist ferner eine erste Steuereinheit 40 auf, welche zum Durchführen der Schritte des Kraftfahrzeugs 10 im erfindungsgemäßen Verfahren eingerichtet ist. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Der Netzwerkserver 70 weist eine zweite Steuereinheit 80 auf, welche zum Durchführen der Schritte des Netzwerkservers 70 im erfindungsgemäßen Verfahren eingerichtet ist. Hierzu verfügt die zweite Steuereinheit 80 über einen internen Speicher 81 und eine CPU 82, welche miteinander kommunizieren, beispielsweise über einen geeigneten Datenbus. Der Netzwerkserver 70 weist ferner ein zweites Kommunikationsmodul 90 auf. Das zweite Kommunikationsmodul 90 weist einen Speicher 92 und einen oder mehrere Transponder beziehungsweise Sendeempfängern 91 auf. Bei den Transpondern 91 handelt es sich um einen Funk-, WLAN-, GPS- oder Bluetooth-Sendeempfänger oder dergleichen. Der Transponder 91 kommuniziert mit dem internen Speicher 92 des zweiten Kommunikationsmoduls 90, beispielsweise über einen geeigneten Datenbus. Bevorzugt ist das zweite Kommunikationsmodul 90 dazu eingerichtet über ein LTE Mobilfunknetz zu kommunizieren.

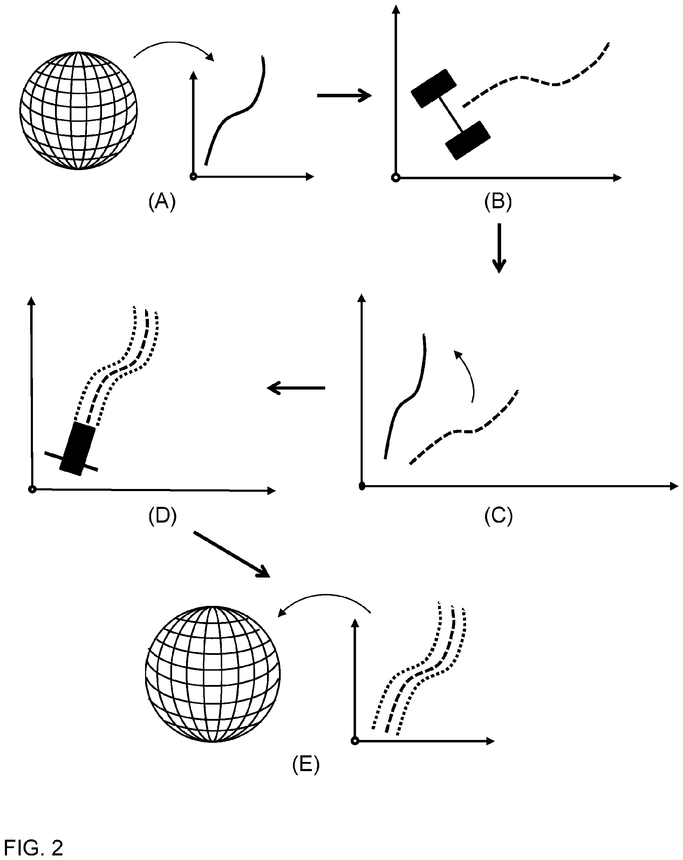

Figur 2 zeigt eine schematische Abfolge von Verfahrensschritten (A), (B), (C), (D) und (E) eines erfindungsgemäßen Verfahrens gemäß einer Durchführungsform, wobei die Verfahrensschritte nicht zwangsläufig alle in der angegebenen Reihenfolge erfolgen müssen.

In Verfahrensschritt (A) des Verfahrens erfolgt dabei die Transformation von GPS-Positionen eines Kraftfahrzeug in ein unbekanntes euklidisches Koordinatensystem. Die GPS-Positionen sind dabei von dem Kraftfahrzeug zu Zeitpunkten $t_1$, $t_2$, $t_3$ und dergleichen erfasst worden und beziehen sich auf die Erdoberfläche als Angaben geographischer Breite und Länge. Die Transformation der GPS-Positionen erfolgt in ein unbekanntes euklidisches Koordinatensystem unter der Annahme, dass diese ein flacher (ebener) Ausschnitt der Erdoberfläche durch Linearisierung der GPS-Koordinaten und durch Erzeugung von x und y Koordinaten ist. Insbesondere wird eine erste, zum Zeitpunkt $t_1$ erfasste GPS-Position als Ausgangspunkt festgelegt und werden relative Abstände $\Delta x$ und $\Delta y$ der weiteren GPS-Positionen bestimmt. Das euklidische Koordinatensystem wird als lokales Bezugssystem des Fahrzeugs angenommen.

In Verfahrensschritt (B) wird eine Fahrzeugeigenbewegung des Fahrzeugs in ein unbekanntes euklidisches Koordinatensystem als lokales Bezugssystem des Fahrzeugs rekonstruiert. Das lokale Bezugssystem des Fahrzeugs stimmt dabei nicht zwangsläufig mit dem Koordinatensystem aus Schritt (A) überein. Bevorzugt wird jedoch eine identische Metrik verwendet. Die Rekonstruktion der Fahrzeugeigenbewegung erfolgt beispielsweise anhand von Raddrehzahlwerten eines rechten Rades und eines linken Rades, die über eine Fahrzeugachse der Länge b verbunden sind mittels Eulergleichungen, wie obenstehend angegeben. Die Fahrzeugeigenbewegung ist dabei eine Trajektorie des Fahrzeugs, welche insbesondere auch die Zeitpunkte $t_1$, $t_2$, $t_3$ und darüber hinaus eine Vielzahl intermediärer Zeitpunkte $t_i$ umfasst. Die Fahrzeugeigenbewegung beschreibt die zeitliche Abfolge der Lage- und Orientierungsänderungen des Kraftfahrzeugs, ist als Trajektorie jedoch nicht absolut im Raum orientiert.

In Verfahrensschritt (C) wird die Fahrzeugeigenbewegung mit den in das lokale Bezugssystem des Fahrzeugs transformierten GPS-Positionen verknüpft. Dies ist in Figur 3 vereinfacht als Drehung der Fahrzeugeigenbewegung auf die durch die GPS-Positionen aufgespannte Trajektorie dargestellt. Darüber hinaus können die Verknüpfungen jedoch auch Stauchungen oder Dehnungen der Fahrzeugeigenbewegungen aufweisen, beispielsweise um Höhenvariationen der Fahrzeugeigenbewegung zu berücksichtigen. Ferner kann das Verknüpfen ein Anpassen der Metrik der in den Schritten (A) und (B) verwendeten Bezugssysteme umfassen. Das Verknüpfen erfolgt insbesondere unter Verwendung der Zeitstempel $t_1$... $t_i$... $t_2$...$t_i$...$t_3$... $t_i$.

In Schritt (D) des Verfahrens ist das Verknüpfen lokaler Messwerte mit der ermittelten Fahrzeugtrajektorie gezeigt. Die lokalen Messwerte sind stets relativ zu dem Kraftfahrzeug, insbesondere relativ zu einem entsprechenden Sensor erfasst. Beispielsweise sind die in Schritt (D) angedeuteten lateralen Abstandswerte mit Bezug zu einem Ultraschallsensor des Kraftfahrzeugs erfasst. Ebenfalls sind die lokalen Sensorwerte mit entsprechenden Zeitstempeln der Sensorerfassung verknüpft. Das Verknüpfen erfolgt somit bevorzugt durch Lokalisation der Sensorposition entlang der ermittelten verknüpften Fahrzeugtrajektorie für jeden Zeitpunkt $t_i$ und durch Zuordnen der zum Zeitpunkt $t_i$ erfassten Sensorwerte zu der so ermittelten Sensorposition. Wie in der Figur 2(D) dargestellt, ergibt sich somit anhand lateraler Abstandsmessungen ein der ermittelten Fahrzeugtrajektorie folgender Fahrschlauch, wobei (nicht dargestellte) Variationen in den seitlichen Begrenzungslinien des Fahrschlauchs freie Parkplätze anzeigen können.

In Verfahrensschritt (E) erfolgt schließlich die Rücktransformation der GPS-Positionen und der nunmehr mit diesen verknüpften lokalen Sensorwerten in die geographische beziehungsweise kartographische Darstellung durch Breiten- und Längenangaben. Die Rücktransformationen entspricht dabei bevorzugt dem Inversen der anfänglichen Transformation von den GPS-Positionen in das unbekannte euklidische Koordinatensystem. Durch Schritt (E) werden somit globalisierte Sensorwerte, das heißt mit den GPS-Positionen (in Breiten- und Längenangaben) verknüpfte Sensorwerte, erzeugt. Diese globalisierten Sensorwerte sind dazu geeignet mit geringem Datenverbrauch und anonymisiert mittels einer Datenverbindung übermittelt zu werden und eignen sich somit insbesondere zum Erstellen einer Karte mit eingebetteten, auf den globalisierten Sensorwerten mehrerer Fahrzeuge basierenden Informationen, insbesondere zu freien Parkplätzen und zu den jeweiligen Größen der Parkplätze.

**Bezugszeichenliste**

| | |
|---|---|
| 10 | Kraftfahrzeug |
| 11 | erster Sensor |
| 12 | zweiter Sensor |
| 13 | dritter Sensor |
| 20 | Kommunikationsmodul |
| 21 | Speicher |
| 22 | Transponder |
| 30 | Fahrsystem |
| 31 | Speicher |
| 32 | Navigationsmodul |
| 40 | Steuereinheit |
| 41 | Speicher |
| 42 | CPU |

51 vierter Sensor
52 fünfter Sensor
53 sechster Sensor
61 Satellit

70 Netzwerkserver
80 Steuereinheit
81 Speicher
82 CPU
90 Kommunikationsmodul
91 Transponder
92 Speicher

100 System

**Patentansprüche**

1. Verfahren zum Einbetten von Sensordaten in eine Karte, aufweisend die Verfahrensschritte:

Ermitteln einer Fahrzeugeigenbewegung eines Kraftfahrzeugs (10) in einem lokalen Bezugssystem des Kraftfahrzeugs (10);
Transformation zumindest einer GPS-Position des Kraftfahrzeugs (10) in das lokale Bezugssystem des Kraftfahrzeugs (10);
Verknüpfen der Fahrzeugeigenbewegung des Kraftfahrzeugs (10) mit der zumindest einen GPS-Position anhand zumindest eines Zeitstempels zu einer Fahrzeugtrajektorie im lokalen Bezugssystem des Kraftfahrzeugs (10);
Verknüpfung lokaler Sensordaten, aufweisend mittels zumindest eines Abstandssensors des Kraftfahrzeugs (10) erfasster und jeweils mit einem Zeitstempel versehener lateraler Abstandwerte, mit der Fahrzeugtrajektorie zu lokalisierten Sensorwerten im lokalen Bezugssystem des Kraftfahrzeugs (10);
Rücktransformation der lokalisierten Sensorwerte zu GPS-Positionen zugeordneten globalisierten Sensorwerten betreffend laterale Abstandswerte; und
Einbetten der globalisierten Sensorwerte und von aus diesen abgeleiteten Informationen zu freien Parkplätzen und zu den Größen der freien Parkplätze in die Karte.

2. Verfahren zum Einbetten von Sensordaten in eine Karte, aufweisend die Verfahrensschritte:

Ermitteln zumindest einer GPS-Position eines Kraftfahrzeugs (10);
Ermitteln einer Fahrzeugeigenbewegung des Kraftfahrzeugs (10) in einem lokalen Bezugssystem des Kraftfahrzeugs (10) und Verknüpfung lokaler Sensordaten, aufweisend mittels zumindest eines Abstandssensors des Kraftfahrzeugs (10) erfasster und jeweils mit einem Zeitstempel versehener lateraler Abstandwerte, mit der Fahrzeugeigenbewegung zu lokalisierten Sensorwerten im lokalen Bezugssystem des Kraftfahrzeugs (10);
Transformation der Fahrzeugeigenbewegung in geographische Koordinaten;
Verknüpfen der transformierten Fahrzeugeigenbewegung des Kraftfahrzeugs (10) mit der zumindest einen GPS-Position anhand zumindest eines Zeitstempels zu einer Fahrzeugtrajektorie in geographischen Koordinaten;
Ermitteln von zu GPS-Positionen zugeordneten globalisierten Sensorwerten betreffend laterale Abstandswerte anhand der Fahrzeugtrajektorie und der lokalisierten Sensorwerte; und
Einbetten der globalisierten Sensorwerte und von aus diesen abgeleiteten Informationen zu freien Parkplätzen und zu den Größen der freien Parkplätze in die Karte.

3. Verfahren nach einem der vorangehenden Ansprüche, wobei die lateralen Abstandwerte mittels zumindest eines Ultraschallsensors des Kraftfahrzeugs (10) erfasst sind.

4. Verfahren nach einem der vorangehenden Ansprüche, wobei die Fahrzeugeigenbewegung anhand von Messwerten zumindest eines zweiten Sensors (51, 52, 53) des Kraftfahrzeugs (10) ermittelt wird.

5. Verfahren nach einem der vorangehenden Ansprüche, wobei jeder der zumindest einen GPS-Position kartesische Koordinaten des lokalen Bezugssystems zugeordnet werden.

6. Verfahren nach einem der vorangehenden Ansprüche, wobei die kartesischen Koordinaten zumindest einer GPS-Position Bestandteil der Fahrzeugtrajektorie sind.

7. Netzwerkserver (70), aufweisend ein zur Datenkommunikation mit einer Mehrzahl von Kraftfahrzeugen (10) eingerichtetes zweites Kommunikationsmodul (90); und eine Steuereinheit (80), wobei die Steuereinheit (80) dafür eingerichtet ist:

jeweils mit einem Zeitstempel versehene lokale Sensordaten, Fahrzeugbewegungsdaten und zumindest eine GPS-Position von einem Kraftfahrzeug (10) zu empfangen, wobei die lokalen Sensordaten mittels zumindest eines Abstandssensors des Kraftfahrzeugs (10) erfasste laterale Abstandwerte aufweisen,
der zumindest einen GPS-Position kartesische Koordinaten eines lokalen Bezugssystems des Kraftfahrzeugs (10) zuzuordnen,
in dem lokalen Bezugssystem des Kraftfahrzeugs (10) eine Fahrzeugeigenbewegung des Kraftfahrzeugs (10) anhand der Fahrzeugbewegungsdaten zu rekonstruieren und anhand der Zeitstempel mit der zumindest einen transformierten GPS-Position zu einer Fahrzeugtrajektorie zu verknüpfen,

die lokalen Sensordaten mit der Fahrzeugtrajektorie zu lokalisierten Sensorwerten zu verknüpfen,

die lokalisierten Sensorwerte zu GPS-Positionen zugeordneten globalisierten Sensorwerten betreffend laterale Abstandswerte zurückzutransformieren, und

die globalisierten Sensorwerte und von aus diesen abgeleiteten Informationen zu freien Parkplätzen und zu den Größen der freien Parkplätze in eine Karte einzubetten.

8. Netzwerkserver (70), aufweisend ein zur Datenkommunikation mit einer Mehrzahl von Kraftfahrzeugen (10) eingerichtetes zweites Kommunikationsmodul (90); und
eine Steuereinheit (80), wobei die Steuereinheit (80) dafür eingerichtet ist:

jeweils mit einem Zeitstempel versehene lokale Sensordaten, Fahrzeugbewegungsdaten und zumindest eine GPS-Position von einem Kraftfahrzeug (10) zu empfangen, wobei die lokalen Sensordaten mittels zumindest eines Abstandssensors des Kraftfahrzeugs (10) erfasste laterale Abstandwerte aufweisen,

die lokalen Sensordaten mit in einem lokalen Bezugssystem des Kraftfahrzeugs (10) ermittelten kartesischen Koordinaten der Fahrzeugbewegungsdaten zu lokalisierten Sensorwerten zu verknüpfen,

die kartesischen Koordinaten der Fahrzeugbewegungsdaten in GPS-Positionen zu transformieren,

die transformierte Fahrzeugeigenbewegung des Kraftfahrzeugs (10) anhand zumindest eines Zeitstempels mit zumindest einer GPS-Position zu einer Fahrzeugtrajektorie in geographischen Koordinaten zu verknüpfen;

die lokalisierten Sensorwerte mittels der Fahrzeugtrajektorie in globale Sensorwerte betreffend laterale Abstandswerte zu transformieren; und

die globalisierten Sensorwerte und von aus diesen abgeleiteten Informationen zu freien Parkplätzen und zu den Größen der freien Parkplätze in eine Karte einzubetten.

9. Kraftfahrzeug (10), aufweisend zumindest einen zum Erfassen von lokalen Sensordaten eingerichteten ersten Sensor (11, 12, 13), umfassend zumindest einen zum Erfassen jeweils mit einem Zeitstempel versehener lateraler Abstandwerte eingerichteten Abstandssensor; zumindest einen zum Erfassen von Fahrzeugbewegungsdaten eingerichteten zweiten Sensor (51, 52, 53); ein zur Kommunikation mit einem Netzwerkserver (70) und GPS-Satelliten (61) eingerichtetes erstes Kommunikationsmodul (20); ein zum automatischen Fahren des Kraftfahrzeugs eingerichtetes Fahrsystem (30), und eine Steuereinheit (40),

wobei die Steuereinheit (40) dafür eingerichtet ist:

eine Karte mit zu GPS-Positionen zugeordneten Sensorwerten mittels des ersten Kommunikationsmoduls (20) von dem Netzwerkserver (70) zu empfangen, und anhand der empfangenen Karte mit zu GPS-Positionen zugeordneten Sensorwerten zumindest ein automatisches Fahrmanöver durchzuführen,

wobei die Steuereinheit ferner dafür eingerichtet ist:

zumindest einer GPS-Position kartesische Koordinaten des lokalen Bezugssystems des Kraftfahrzeugs zuzuordnen,

in dem lokalen Bezugssystem des Kraftfahrzeugs eine Fahrzeugeigenbewegung des Kraftfahrzeugs anhand der Fahrzeugbewegungsdaten zu rekonstruieren und anhand zumindest eines Zeitstempels mit der zumindest einen transformierten GPS-Position zu einer Fahrzeugtrajektorie zu verknüpfen,

die lokalen Sensordaten mit der Fahrzeugtrajektorie zu lokalisierten Sensorwerten zu verknüpfen,

die lokalisierten Sensorwerte zu GPS-Positionen zugeordneten globalisierten Sensorwerten betreffend laterale Abstandswerte zurückzutransformieren, und

die globalisierten Sensorwerte und von aus diesen abgeleiteten Informationen zu freien Parkplätzen und zu den Größen der freien Parkplätze in eine Karte einzubetten.

10. System (100) aus einem Netzwerkserver (70) gemäß Anspruch 7 oder 8 und einem Kraftfahrzeug (10) gemäß Anspruch 9.

11. Computerprogramm, umfassend Befehle, die bei der Ausführung des Programms durch eine Steuereinheit (80) eines Netzwerkservers (70), diesen veranlassen, die in den Ansprüchen 7 und 8 angegebenen Schritte durchzuführen.

12. Computerprogramm, umfassend Befehle, die bei der Ausführung des Programms durch eine Steuereinheit (40) eines Kraftfahrzeugs (10), dieses veranlassen, die in dem Anspruch 9 angegebenen Schritte durchzuführen.

**Claims**

1. Method for embedding sensor data into a map, comprising the method steps of:

   determining a vehicle movement of a motor vehicle (10) in a local reference system of the motor vehicle (10);
   transforming at least one GPS position of the motor vehicle (10) into the local reference system of the motor vehicle (10);
   linking the vehicle movement of the motor vehicle (10) with the at least one GPS position based on at least one time stamp to form a vehicle trajectory in the local reference system of the motor vehicle (10);
   linking local sensor data, comprising lateral distance values which are detected by means of at least one distance sensor of the motor vehicle (10) and are each provided with a time stamp, with the vehicle trajectory to form localized sensor values in the local reference system of the motor vehicle (10);
   transforming the localized sensor values back into globalized sensor values concerning lateral distance values, which are assigned to GPS positions; and
   embedding the globalized sensor values and the information derived therefrom regarding free parking spaces and the sizes of free parking spaces into the map.

2. Method for embedding sensor data into a map, comprising the method steps of:

   determining at least one GPS position of a motor vehicle (10);
   determining a vehicle movement of the motor vehicle (10) in a local reference system of the motor vehicle (10) and linking local sensor data, comprising lateral distance values which are detected by means of at least one distance sensor of the motor vehicle (10) and are each provided with a time stamp, with the vehicle movement to form localized sensor values in the local reference system of the motor vehicle (10);
   transforming the vehicle movement into geographical coordinates;
   linking the transformed vehicle movement of the motor vehicle (10) with the at least one GPS position based on at least one time stamp to form a vehicle trajectory in geographical coordinates;
   determining globalized sensor values concerning lateral distance values, which are assigned to GPS positions, based on the vehicle trajectory and the localized sensor values; and
   embedding the globalized sensor values and the information derived therefrom regarding free parking spaces and the sizes of free parking spaces into the map.

3. Method according to either of the preceding claims, wherein the lateral distance values are detected by means of at least one ultrasonic sensor of the motor vehicle (10).

4. Method according to any of the preceding claims, wherein the vehicle movement is determined based on measured values from at least one second sensor (51, 52, 53) of the motor vehicle (10).

5. Method according to any of the preceding claims, wherein Cartesian coordinates of the local reference system are assigned to each of the at least one GPS position.

6. Method according to any of the preceding claims, wherein the Cartesian coordinates of at least one GPS position are part of the vehicle trajectory.

7. Network server (70) having a second communication module (90) designed for data communication with a plurality of motor vehicles (10); and a control unit (80), wherein the control unit (80) is designed to:

   receive local sensor data, vehicle movement data and at least one GPS position from a motor vehicle (10), which are each provided with a time stamp, wherein the local sensor data comprise lateral distance values detected by means of at least one distance sensor of the motor vehicle (10),
   assign Cartesian coordinates of a local reference system of the motor vehicle (10) to the at least one GPS position,
   reconstruct a vehicle movement of the motor vehicle (10) in the local reference system of the motor vehicle (10) based on the vehicle movement data, and to link said movement with the at least one transformed GPS position based on the time stamp to form a vehicle trajectory,
   link the local sensor data with the vehicle trajectory to form localized sensor values,
   transform the localized sensor values back into globalized sensor values concerning lateral distance values, which are assigned to GPS positions, and
   embed the globalized sensor values and the information derived therefrom regarding free parking spaces and the sizes of the free parking spaces into a map.

8. Network server (70) having a second communication module (90) designed for data communication with a plurality of motor vehicles (10); and a control unit (80), wherein the control unit (80) is designed to:

receive local sensor data, vehicle movement data and at least one GPS position from a motor vehicle (10), which are each provided with a time stamp, wherein the local sensor data comprise lateral distance values detected by means of at least one distance sensor of the motor vehicle (10),

link the local sensor data with Cartesian coordinates of the vehicle movement data, which are determined in a local reference system of the motor vehicle (10), to form localized sensor values,

transform the Cartesian coordinates of the vehicle movement data into GPS positions,

link the transformed vehicle movement of the motor vehicle (10) with at least one GPS position, based on at least one time stamp, to form a vehicle trajectory in geographical coordinates;

transform the localized sensor values into global sensor values concerning lateral distance values by means of the vehicle trajectory; and

embed the globalized sensor values and the information derived therefrom regarding free parking spaces and the sizes of the free parking spaces into a map.

9. Motor vehicle (10) having at least one first sensor (11, 12, 13) designed to capture local sensor data, the motor vehicle comprising at least one distance sensor designed to capture lateral distance values which are each provided with a time stamp; at least one second sensor (51, 52, 53) designed to capture vehicle movement data; a first communication module (20) designed to communicate with a network server (70) and GPS satellites (61); a driving system (30) designed to automatically drive the motor vehicle, and a control unit (40), wherein the control unit (40) is designed to:

receive a map having sensor values assigned to GPS positions from the network server (70) by means of the first communication module (20), and

carry out at least one automatic driving maneuver based on the received map having sensor values assigned to GPS positions,

wherein the control unit is further designed to:

assign Cartesian coordinates of the local reference system of the motor vehicle to at least one GPS position,

reconstruct a vehicle movement of the motor vehicle in the local reference system of the motor vehicle based on the vehicle movement data, and to link said movement with the at least one transformed GPS position, based on at least one time stamp, to form a vehicle trajectory,

link the local sensor data with the vehicle trajectory to form localized sensor values,

transform the localized sensor values back into globalized sensor values concerning lateral distance values, which are assigned to GPS positions, and

embed the globalized sensor values and the information derived therefrom regarding free parking spaces and the sizes of the free parking spaces into a map.

10. System (100) consisting of a network server (70) according to claim 7 or 8 and a motor vehicle (10) according to claim 9.

11. Computer program comprising instructions which, when the program is executed by a control unit (80) of a network server (70), cause the latter to carry out the steps specified in claims 7 and 8.

12. Computer program comprising instructions which, when the program is executed by a control unit (40) of a motor vehicle (10), cause the latter to carry out the steps specified in claim 9.

**Revendications**

1. Procédé d'intégration de données de capteur dans une carte, présentant les étapes de procédé :

détermination d'un mouvement propre de véhicule d'un véhicule automobile (10) dans un système de référence local du véhicule automobile (10) ;

transformation d'au moins une position GPS du véhicule automobile (10) dans le système de référence local du véhicule automobile (10) ;

rattachement du mouvement propre de véhicule du véhicule automobile (10) à l'au moins une position GPS à l'aide d'au moins un horodatage pour former une trajectoire de véhicule dans le système de référence local du véhicule automobile (10) ;

rattachement de données de capteur locales, présentant des valeurs de distance latérale acquises au moyen d'au moins un capteur de distance du véhicule automobile (10) et pourvues respectivement d'un horodatage, avec la trajectoire de véhicule pour former des valeurs de capteur localisées dans le système de référence local du véhicule automobile (10) ; transformation inverse des valeurs de capteur localisées en valeurs de capteur globalisées associées à des positions GPS concernant des valeurs de distance latérale ; et intégration dans la carte des valeurs de capteur globalisées et d'informations qui en découlent sur les places de stationnement libres et sur les dimensions des places de stationnement libres.

2. Procédé d'intégration de données de capteur dans une carte, présentant les étapes de procédé :

détermination d'au moins une position GPS d'un véhicule automobile (10) ; détermination d'un mouvement propre de véhicule du véhicule automobile (10) dans un système de référence local du véhicule automobile (10) et rattachement de données de capteur locales, présentant des valeurs de distance latérale acquises au moyen d'au moins un capteur de distance du véhicule automobile (10) et pourvues respectivement d'un horodatage, avec le mouvement propre de véhicule pour obtenir des valeurs de capteur localisées dans le système de référence local du véhicule automobile (10) ; transformation du mouvement propre de véhicule en coordonnées géographiques ; rattachement du mouvement propre de véhicule transformé du véhicule automobile (10) avec l'au moins une position GPS à l'aide d'au moins un horodatage pour obtenir une trajectoire de véhicule en coordonnées géographiques ; détermination de valeurs de capteur globalisées associées à des positions GPS concernant des valeurs de distance latérale à l'aide de la trajectoire de véhicule et des valeurs de capteur localisées ; et intégration dans la carte des valeurs de capteur globalisées et d'informations qui en découlent sur les places de stationnement libres et sur les dimensions des places de stationnement libres.

3. Procédé selon l'une des revendications précédentes, dans lequel les valeurs de distance latérale sont acquises au moyen d'au moins un capteur à ultrasons du véhicule automobile (10).

4. Procédé selon l'une des revendications précédentes, dans lequel le mouvement propre de véhicule est déterminé à l'aide de valeurs de mesure d'au moins un second capteur (51, 52, 53) du véhicule automobile (10).

5. Procédé selon l'une des revendications précédentes, dans lequel des coordonnées cartésiennes du système de référence local sont associées à chacune de l'au moins une position GPS.

6. Procédé selon l'une des revendications précédentes, dans lequel les coordonnées cartésiennes d'au moins une position GPS font partie de la trajectoire de véhicule.

7. Serveur de réseau (70) présentant un second module de communication (90) adapté pour communiquer des données avec une pluralité de véhicules automobiles (10) ; et une unité de commande (80), dans lequel l'unité de commande (80) est adaptée pour :

recevoir d'un véhicule automobile (10) des données de capteur locales respectivement pourvues d'un horodatage, des données de mouvement de véhicule et au moins une position GPS, dans lequel les données de capteur locales présentent des valeurs de distance latérale acquises au moyen d'au moins un capteur de distance du véhicule automobile (10), associer à l'au moins une position GPS des coordonnées cartésiennes d'un système de référence local du véhicule automobile (10), dans le système de référence local du véhicule automobile (10), reconstruire un mouvement propre de véhicule du véhicule automobile (10) à l'aide des données de mouvement de véhicule et le rattacher, à l'aide des horodatages, à l'au moins une position GPS transformée en une trajectoire du véhicule, rattacher les données de capteur locales à la trajectoire de véhicule pour obtenir des valeurs de capteur localisées, transformer de manière inverse les valeurs de capteur localisées en valeurs de capteur globalisées associées à des positions GPS concernant des valeurs de distance latérale, et intégrer dans une carte les valeurs de capteur globalisées et des informations qui en découlent sur les places de stationnement libres et sur les dimensions des places de stationnement libres.

8. Serveur de réseau (70) présentant un second module de communication (90) adapté pour communiquer des données avec une pluralité de véhicules automobiles (10) ; et une unité de commande (80), dans lequel l'unité de commande (80) est adaptée pour :

recevoir d'un véhicule automobile (10) des données de capteur locales respectivement pourvues d'un horodatage, des données de mouvement de véhicule et au moins une position GPS, dans lequel les données de capteur locales présentent des valeurs de distance latérale acquises au moyen d'au moins un capteur de distance du véhicule automobile (10),
rattacher les données de capteur locales avec des coordonnées cartésiennes des données de mouvement de véhicule déterminées dans un système de référence local du véhicule automobile (10) pour obtenir des valeurs de capteur localisées,
transformer les coordonnées cartésiennes des données de mouvement de véhicule en positions GPS,
rattacher le mouvement propre de véhicule (10) transformé à l'aide d'au moins un horodatage avec au moins une position GPS pour former une trajectoire de véhicule en coordonnées géographiques ;
transformer les valeurs de capteur localisées en valeurs de capteur globales concernant les valeurs de distance latérale au moyen de la trajectoire de véhicule ; et
intégrer dans une carte les valeurs de capteur globalisées et des informations qui en découlent sur les places de stationnement libres et sur les dimensions des places de stationnement libres.

9. Véhicule automobile (10), présentant au moins un premier capteur (11, 12, 13) conçu pour acquérir des données de capteur locales, comprenant au moins un capteur de distance conçu pour acquérir des valeurs de distance latérale respectivement pourvues d'un horodatage ; au moins un second capteur (51, 52, 53) conçu pour acquérir des données de mouvement de véhicule ; un premier module de communication (20) conçu pour communiquer avec un serveur de réseau (70) et des satellites GPS (61) ; un système de conduite (30) conçu pour la conduite automatique du véhicule automobile, et une unité de commande (40), dans lequel l'unité de commande (40) est conçue pour :

   recevoir une carte avec des valeurs de capteur associées à des positions GPS au moyen du premier module de communication (20) depuis le serveur de réseau (70), et
   effectuer au moins une manœuvre de conduite automatique à l'aide de la carte reçue avec des valeurs de capteur associées à des positions GPS,
   dans lequel l'unité de commande est en outre conçue pour :

      associer à au moins une position GPS des coordonnées cartésiennes du système de référence local du véhicule automobile,
      dans le système de référence local du véhicule automobile, reconstruire un mouvement propre de véhicule du véhicule automobile à l'aide des données de mouvement de véhicule et de le rattacher, à l'aide d'au moins un horodatage, à l'au moins une position GPS transformée pour former une trajectoire de véhicule,
rattacher les données de capteur locales à la trajectoire de véhicule pour obtenir des valeurs de capteur localisées,
transformer de manière inverse les valeurs de capteur localisées en valeurs de capteur globalisées associées à des positions GPS concernant des valeurs de distance latérale, et
intégrer dans une carte les valeurs de capteur globalisées et des informations qui en découlent sur les places de stationnement libres et sur les dimensions des places de stationnement libres.

10. Système (100) constitué d'un serveur de réseau (70) selon la revendication 7 ou 8 et d'un véhicule automobile (10) selon la revendication 9.

11. Programme d'ordinateur comprenant des instructions qui, lors de l'exécution du programme par une unité de commande (80) d'un serveur de réseau (70), amènent ce dernier à exécuter les étapes indiquées dans les revendications 7 et 8.

12. Programme d'ordinateur comprenant des instructions qui, lors de l'exécution du programme par une unité de commande (40) d'un véhicule automobile (10), amènent ce dernier à exécuter les étapes indiquées dans la revendication 9.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017204455 A1
- DE 102009029553 A1
- US 20180364349 A1
- DE 102016212629 A1

**In der Beschreibung aufgeführte Nicht-Patentliteratur**

- Mapping with a ground robot in GPS denied and degraded environments. **ROGERS JOHN G et al.** 2015 AMERICAN CONTROL CONFERENCE (ACC). IEEE